# EUROPEAN PATENT APPLICATION

(11) **EP 1 538 835 A2**
(43) Date of publication of application: **08.06.2005**
(21) Application number: 04257408.7
(22) Date of filing: 30.11.2004
(51) Int. Cl.: H04N 5/92

(54) **Data recording system, data recording apparatus, data transmission apparatus, data recording method and recording medium on which a recording program is recorded**

(30) Priority: 02.12.2003 JP 2003403607
(71) Applicant: Pioneer Corporation, Tokyo-to (JP)
(72) Inventor: Hosoi, Masayuki, c/o Pioneer Corporation, Tsurugashima-shi, Saitama-ken (JP)
(74) Representative: Townsend, Victoria Jayne

(57) **Abstract**

A data-recording system (100) that records at least sound generated from a sound source or video that is acquired by filming a target object, characterized in that the data-recording system is provided with a data-transmission apparatus (110) that is attached to at least said sound source or said object, and that sends attribute data indicating the attributes of at least that sound source or that object; and a data-recording apparatus (120) that correlates and records attribute data sent from said data-transmission apparatus (110) with at least the sound generated from a sound source to which that data-transmission apparatus (110) is attached, or video acquired by filming an object.

## Description

### BACKGROUND OF THE INVENTION

### 1.Field of the Invention:

This invention relates to an image-recording system that records images and sound as well as attributes related to images or sound.

### 2.Related Art:

In recent years, digital-broadcast systems have been put into use in which digitized television signals are transmitted by way of artificial satellites such as broadcast satellites or communications satellites, and then those signals are received in private homes in order to view television programs. In this kind of system, it is possible to maintain a plurality of broadcast channels, so it is possible to broadcast a very large number of programs.

In this kind of system, program information that indicates the broadcast contents of a plurality of programs, for example data (hereafter referred to as meta data) in which specified information is included for that broadcast-contents data such as program arrangement information (hereafter referred to as SI (Service Information)) in a BS (Broadcast Satellite) digital broadcast or CS (Communication Satellite) digital broadcast, is transmitted together with the video or audio information (hereafter referred to as video and audio data) of the TV programs from the satellite to the television-broadcast-receiving apparatus in each home.

Also, each television-broadcast-receiving apparatus that receives broadcast-contents data broadcast by this system outputs the video and audio data to the TV display and extracts the meta data, then uses that meta data to provide various services to the user.

On the other hand, with the development of imaging apparatuses such as compact digital cameras or digital video cameras and the like, it has become common for users to take digital moving or still images of objects such as scenery or people.

For this kind of imaging apparatus, there is technology in which together with filming and recording image data that includes audio, a transmitter is attached to the object being filmed, and the imaging apparatus correlates the Identification information (hereinafter, referred to as ID information) of the object that is transmitted by this transmitter (meta data) with the video data and records its. More specifically, this imaging apparatus is such that it reads the blinking pattern of a data tag that blinks and is attached to the object being filmed, then multiplexes that blinking pattern with the video data as ID information and records it. (For example, refer to Japanese Unexamined Patent Application Publication No. 2001-320702)

However, in the broadcast system described above, the meta data indicates only attributes for the entire contents data such as the genre or broadcast date of the contents data to which that meta data is attached. Also, in the imaging apparatus described above, the ID information is simply correlated with the video data, and attribute information for the object being filmed is not particularly linked to and recorded with the video data.

Also, in this broadcast system or with this imaging apparatus, in the case of video data having a story such as broadcast contents data, it is not possible to indicate attributes for each frame or each scene, so the contents of video data having a story cannot be analyzed based on attributes for each frame or each scene.

### SUMMARY OF THE INVENTION

Taking the inconveniences mentioned above into consideration, the object of this invention is to provide an image-recording system that correlates attribute data of objects, which are linked to video data having a story and that appear in that video data, with the video data and records that attribute data.

The above object of the present invention can be achieved by a data-recording system of the present invention. The data-recording system that records at least sound generated from a sound source or video that is acquired by filming a target object, and is provided with: a data-transmission apparatus that is attached to at least the sound source or the object, and that sends attribute data indicating the attributes of at least that sound source or that object; and a data-recording apparatus that correlates and records attribute data sent from the data-transmission apparatus with at least the sound generated from a sound source to which that data-transmission apparatus is attached, or video acquired by filming an object.

According to the present invention, an image-recording system correlates object data, which is sent from the data-transmission apparatus that is attached to the sound source or object, with the sound generated from the sound source or the video taken of the obj ect, and records it. Also, when recording the sound source or object, the object data of that sound source or object can be correlated with the sound source or object and recorded, so when editing the recorded sound source or video of the object, such as when analyzing the recorded video story, or when reproducing a summary that accurately provides the contents while at the same time shortens the reproduction time of the recorded video, it is possible to perform recording or reproduction based on that object data.

In one aspect of the present invention can be achieved by the data-recording system of the present invention. The data-recording system of the present invention is, wherein when the data-transmission apparatus is attached to the object; the data-recording apparatus is provided with: a filming device which films the object; a data-acquisition device which acquires images of the field of view of the filmed object as contents data; a receiving device which receives attribute data that is sent from the data-transmission apparatus; and a recording device which records the acquired video data, as well as correlating and recording the received attribute data with that video data to be recorded.

According to the present invention, the image-recording system together with acquiring the image of the field of view of the object as contents data, receives object data sent from the data-transmission apparatus, and when recording the acquired video data, correlates and records the received object data with that video data to be recorded. Also, when recording the object, it is possible to correlate and record the object data for that object with speech that is made by the object, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In another aspect of the present invention can be achieved by the data-recording system of the present invention. The data-recording system of the present invention is, wherein when the acquisition device of the data-recording apparatus acquires the images of the field of view of the filmed object as video data is provided with a plurality of frames, the recording device of the data-recording apparatus correlates and records the attribute data with the video data for each of the frames.

According to the present invention, object data is correlated and recorded with the video data, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In further aspect of the present invention can be achieved by the data-recording system of the present invention. The data-recording system of the present invention is, wherein when the data-transmission apparatus is attached to a sound source, the data-recording apparatus is provided with: a pick-up-microphone that picks up the sound generated by the sound source; a data-acquisition device which acquires the sound picked up by the microphone as contents data; a receiving device which receives attribute data that is sent from the data-transmission apparatus; and a recording device which records the acquired audio data, as well as correlates and records the received attribute data with that audio data to be recorded.

According to the present invention, an image-recording system acquires the sound generated from the sound source as contents data, as well as receives object data sent from the data-transmission apparatus, and when recording the acquired audio data, it correlates and records the received object data with that audio data to be recorded. Also, when recording the sound generated from the object, the object data of the object is correlated with the spoken speech or obj ect and recorded, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In further aspect of the present invention can be achieved by the data-recording system of the present invention. The data-recording system of the present invention is, wherein when the acquisition device which the data-recording apparatus acquires the picked up sound as audio data comprising a plurality of frames, the recording device of the data-recording apparatus correlates and records the attribute data with the audio data to be recorded for each of the frames.

According to the present invention, object data is correlated with the audio data for each frame and recorded, so when editing or reproducing the recorded sound source or the video of the object, it is possible to perform recording or reproduction based on that object data for each frame.

The above object of the present invention can be achieved by a data-recording apparatus of the present invention. The data-recording apparatus is provided with: an acquisition device which acquires at least sound generated from a sound source or video acquired by filming a target object to be filmed as contents data; a receiving device which receives attribute data that is sent from a data-transmission apparatus that is attached to at least the sound source or the object and that indicates the attributes of at least that sound source or that object; and a recording device that correlates and records the attribute data with the acquired contents data.

According to the present invention, attribute information such as identification information can be recorded in a data-recording unit together with audio data, so when editing the recorded sound source, such as when analyzing music such as recorded songs, or when accurately reproducing just the sound of an instrument in music such as a recorded song, it is possible to perform recording and reproduction based on that object data.

In one aspect of the present invention can be achieved by the data-recording apparatus of the present invention. The data-recording apparatus of the present invention is, wherein the receiving device receives at least identification information for identifying the filmed object from other objects, name information indicating the name of the object, age information indicating the age of the object, occupation information indicating the occupation of the object, gender information indicating the gender of the object, or personality information indicating the personality of the object, as the attribute information.

According to the present invention, attribute information such as the ID (identification) information can be recording in the data-recording unit together with the video data or audio data, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In another aspect of the present invention can be achieved by the data-recording apparatus of the present invention. The data-recording apparatus of the present invention is further provided with: a projection device which projects an optical beam onto a filming range in which films by the filming device is possible.

According to the present invention, by determining whether or not the data-transmission apparatus is in the filming range, and then sending that information to the imaging-camera apparatus, the imaging-camera apparatus is able to record this judgment result together with the video data in the data-recording unit, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In further aspect of the present invention can be achieved by the data-recording apparatus of the present invention. The data-recording apparatus of the present invention is, wherein when optical-beam information is sent from the data-transmission device attached to the object indicating that an optical beam projected from the projection device has been received, the receiving device receives the optical-beam information together with the attribute information, and the recording device records the optical-beam information together with the attribute information.

According to the present invention, by determining whether or not the data-transmission apparatus is in the filming range, and then sending that information to the imaging-camera apparatus, the imaging-camera apparatus is able to record this judgment result together with the video data in the data-recording unit, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In further aspect of the present invention can be achieved by the data-recording apparatus of the present invention. The data-recording apparatus of the present invention is, wherein when the acquisition device acquires sound generated from a sound source as contents data, the acquisition device is provided with: a pick-up microphone that picks up sound generated from the sound source; and a data-acquisition device that acquires sound picked up by the microphone as contents data.

According to the present invention, an imaging-camera apparatus acquires sound generated from the sound source as contents data, as well as receives object data sent from a data-transmission apparatus, and when recording the acquired audio data, it correlates and records the received object data with that audio data to be recorded. When recording the sound generated from the object, the object data of the object can be correlated and recorded with the spoken sound or obj ect, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In further aspect of the present invention can be achieved by the data-recording apparatus of the present invention. The data-recording apparatus of the present invention is, wherein the acquisition device acquires the sound as contents data comprising a plurality of frames, and the recording device correlates and records the attribute data with the audio data for each the frame.

According to the present invention, object data is correlated with the audio data for each frame and recorded, so when editing the recorded sound source, or when performing reproduction, it is possible to perform recording and reproduction based on that object data for each frame.

In further aspect of the present invention can be achieved by the data-recording apparatus of the present invention. The data-recording apparatus of the present invention is, wherein when sound-source-output information is sent from the data-transmission apparatus attached to the sound source indicating whether or not there is sound output from the sound source, the receiving unit receives the sound-source-output information together with the attribute information, and the recording device records the sound-source-output information together with the attribute information.

According to the present information, speech information is recorded together with the video data or audio data in a data-recording unit, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data.

In further aspect of the present invention can be achieved by the data-recording apparatus of the present invention. The data-recording apparatus of the present invention is, wherein when the receiving device sends or receives the contents data to or from the data-transmission apparatus, it determines whether or not the data-transmission apparatus is capable of sending or receiving that contents data.

According to the present invention, when an imaging-camera apparatus sends or receives contents data to or from a data-transmission apparatus, it determines whether or not the data-transmission apparatus is able to send or receive those contents data, so it is possible to prevent the object data that is sent by the data-transmission apparatus from escaping to the outside unintentionally.

The above object of the present invention can be achieved by a data- transmission apparatus of the present invention. The data-transmission apparatus that is attached to at least a sound source that generates sound or a target object to be filmed, and is provided with: a memory device in which attribute data indicating the attributes of at least the sound source or object is stored in advance; and a sending device that sends the attribute data to the data-recording apparatus in order to correlate and record the stored attribute data with the contents data when the data-recording apparatus records at least the sound generated from the sound source or images of the field of view of the filmed object as contents data.

According to the present invention, when recording the sound source or object, the object data of that sound source or object can be correlated with the sound source or object and recorded, so when editing the recorded sound source or video of the object, such as when analyzing the recorded video story, or when reproducing a summary that accurately provides the contents while at the same time shortens the reproduction time of the recorded video, it is possible to perform recording or reproduction based on that object data .

In one aspect of the present invention can be achieved by the data- transmission apparatus of the present invention. The data-transmission apparatus of the present invention is, wherein the data-recording apparatus records by filming the object and the data-recording apparatus projects an optical beam on to a filming range, and is provided with: an optical-beam-receiving device that receives said optical beam; and wherein the sending device sends optical-beam information to the data-recording apparatus indicating that the optical beam was received.

According to the present invention, by sending filming-range information to an imaging-camera apparatus and having that imaging-camera apparatus record this judgment result in a data-recording unit together with the video data, it is possible to determine whether or not the object to which the data-transmission apparatus is attached is in the filming range, so when editing the recorded sound source or the video of the obj ect, such as when analyzing the recorded video story, or when reproducing a summary that accurately provides the contents while at the same time shortens the reproduction time of the recorded video, it is possible to perform recording or reproduction based on that object data.

In another aspect of the present invention can be achieved by the data- transmission apparatus of the present invention. The data-transmission apparatus of the present invention is further provided with: a sound-source microphone that picks up sound generated from the sound source; and a judgment device which determines whether or not there is sound output from the sound source based on sound picked up by the sound-source microphone; and wherein the sending device sends sound-source output information to the data-recording apparatus indicating the judgment result determined by the judgment device.

According to the present invention, speech information indicating the judgment result determined by a speech-judgment unit can be sent to an imaging-camera apparatus, and this speech information is recorded in a data-recording unit together with the audio data or video data, so when editing the recorded sound source or the video of the obj ect, such as when analyzing the recorded video story, or when reproducing a summary that accurately provides the contents while at the same time shortens the reproduction time of the recorded video, it is possible to perform recording or reproduction based on that object data.

The above object of the present invention can be achieved by a data-recording method of the present invention. The data-recording method of recording at least sound generated from a sound source or video that is acquired by filming a target object, and is provided with: a sending process that sends attribute data from a data-transmission apparatus that is attached to at least the sound source or the object indicating at least the attributes of the sound source or object; and a recording process of correlating and recording the sent attribute data with sound generated from the sound source or images obtained by filming the object to which the data-transmission apparatus is attached.

According to the present invention, an image-recording method correlates object data, which is sent from a data-recording apparatus that is attached to the sound source or object, with the sound generated from the sound source or the video taken of the object, and records it. Also, when recording the sound source or object, the object data of that sound source or object can be correlated with the sound source or object and recorded, so when editing the recorded sound source or video of the object, such as when analyzing the recorded video story, or when reproducing a summary that accurately provides the contents while at the same time shortens the reproduction time of the recorded video, it is possible to perform recording or reproduction based on that object data.

The above object of the present invention can be achieved by a data-recording program of the present invention. The data-recording program for recording contents data in a data-recording device, the program causes the computer to function as: an acquisition device which acquires at least sound generated from a sound source or images obtained by filming a target object as contents data; a receiving device which receives attribute data sent from a data-transmission apparatus that is attached to at least the sound source or the object indicating the attributes of at least that sound source or that object; and a recording-control device which correlates the received attribute data with the acquired contents data and records them in a data-recording unit.

According to the present invention, an data-recording program correlates object data, which is sent from a data-recording apparatus that is attached to the sound source or object, with the sound generated from the sound source or the video taken of the object, and records it. Also, when recording the sound source or object, the object data of that sound source or object can be correlated with the sound source or object and recorded, so when editing the recorded sound source or video of the object, such as when analyzing the recorded video story, or when reproducing a summary that accurately provides the contents while at the same time shortens the reproduction time of the recorded video, it is possible to perform recording or reproduction based on that object data.

### BRIEF DESCRIPTION OF THE DRAWINGS

FIG. 1 is a block diagram showing the system construction of the image-recording system of a first embodiment of the invention;
FIG. 2 is a drawing showing an example of the construction of a video stream that the imaging-camera apparatus of a first embodiment of the invention records in the data-recording unit;
FIG. 3 is a drawing showing an example of the object data that is sent from the data-transmission apparatus of a first embodiment of the invention to the imaging-camera apparatus;
FIG. 4 is a block diagram showing the construction of the data-transmission apparatus of the image-recording system of a first embodiment of the invention;
FIG. 5 is a block diagram showing the construction of the imaging-camera apparatus of the image-recording system of a first embodiment of the invention;
FIG. 6 is a flowchart showing the control by the system-control unit and the operation of each part in the verification process of the imaging-camera apparatus of a first embodiment of the invention;
FIG. 7 is a flowchart showing the control by the system -control unit and the operation of each part in the verification process of the imaging-camera apparatus of a first embodiment of the invention;
FIG. 8 is a drawing showing an example of the construction of the audio stream that the data-recording apparatus of a second embodiment of the invention records in the data-recording unit;
FIG. 9 is a drawing showing an example of the object data that is sent from the data-transmission apparatus of a second embodiment of the invention to the data-recording apparatus;
FIG. 10 is a block diagram showing the construction of the data-transmission apparatus of the data-recording system of a second embodiment of the invention;
FIG. 11 is a block diagram showing the construction of the imaging-camera apparatus of the data-recording system of a second embodiment of the invention; and
FIG. 12 is a flowchart showing the control by the system control unit and operation of each part in the recording process by the data-recording apparatus of a second embodiment of the invention.

### DESCRIPTION OF THE PREFERRED EMBODIMENTS

Next, the preferred embodiments of the invention will be explained based on the drawings.

Each of the embodiments explained below are embodiments in which the data-transmission apparatus, data-recording apparatus and data-recording system of this invention are applied to an image-recording system that films and records images that become the material of the broadcast-contents data, and to a data-recording system that collects and records sounds that become the material of the broadcast contents.

### (1) Embodiment 1

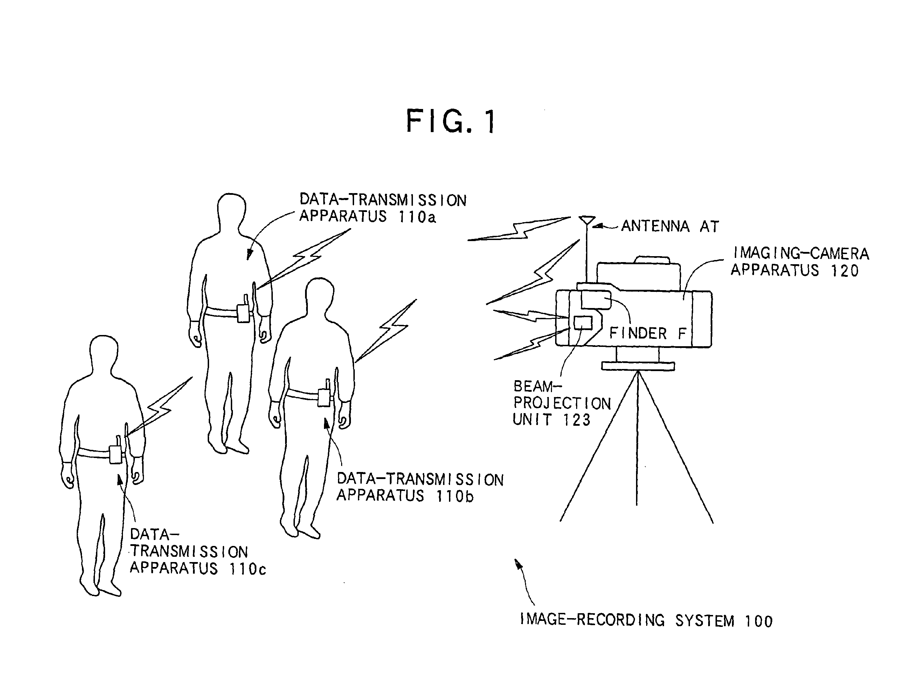

First, FIG. 1 to FIG. 7 will be used to explain a first embodiment of the image-recording system of this invention.

Next, FIG. 1 will be used to explain the construction of the image-recording system of this embodiment.

FIG. 1 is a block diagram showing the system construction of the image-recording system of this embodiment.

As shown in FIG. 1, the image-recording system 100 comprises: a plurality of data-transmission apparatuses 110 that are attached to an object such as a person or character, to be filmed, and transmits attribute data indicating the attributes of that object; and an imaging-camera apparatus 120 with data-receiving function (hereafter this will simply be referred to as the imaging-camera apparatus 120) that receives the transmitted attribute data and filmed images, including sound, of objects or scenery that will become the material of the broadcast contents, and records the filmed images and obj ect data containing the received attribute data.

The data-transmission apparatus 110 and the imaging-camera apparatus 120 are such that they send and receive attribute data wirelessly.

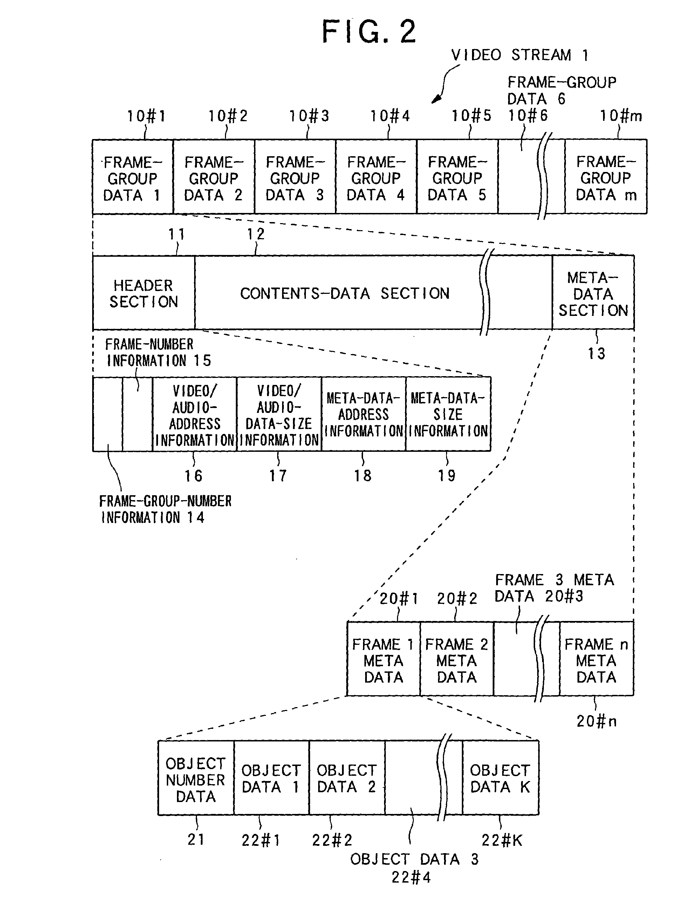

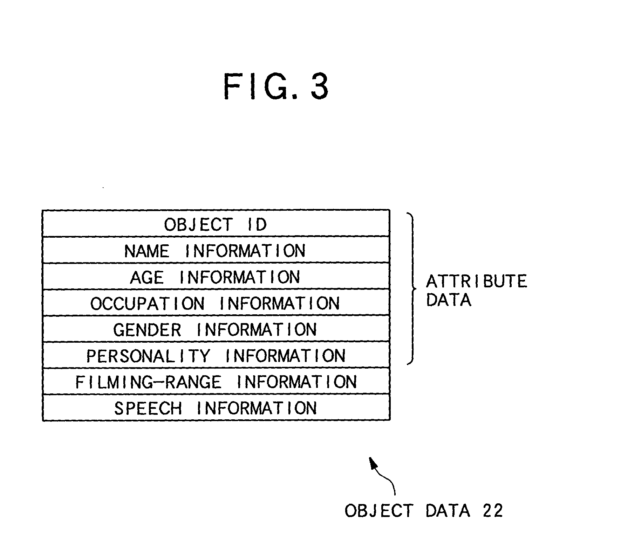

First, before explaining the construction of each apparatus, FIG. 2 and FIG. 3 will be used to explain the video stream that comprises the contents data and object data that are recorded in the image-recording apparatus.

FIG. 2 is a drawing showing an example of the construction of the video stream that the imaging-camera apparatus records in the data-recording unit, and FIG. 3 is a drawing showing an example of the object data that is sent from the data-transmission apparatus to the imaging-camera apparatus.

As shown in FIG. 2, the video stream 1 of this embodiment is constructed from a plurality of frame-group data 10 that is compiled for each frame group containing about 1 to 15 frames, and each frame-group data 10 comprises: a header section 11 in which specified data related to the recorded contents data is recorded; a contents-data section 12 which contains video data and audio data for each frame of the frame group; and a meta-data unit 13 that contains object data for each frame group.

More specifically, the header unit 11 comprises: frame-group-number information 14 for identifying the order numbers and other frame groups in the video stream of each frame group; frame-number information 15 the indicates the number of frames recorded for each frame group; address information (hereafter referred to as video/audio-data-address information) 16 that gives the address of each frame in the video data and audio data contained in the contents-data section 12; data-quantity information (hereafter referred to as video/audio-data-size information) 17 for the video data and audio data contained in the contents-data section 12; address information (hereafter referred to as meta-data-address information) 18 that gives the address of the meta data contained in the contents-data section 12; and meta-data-quantity information (hereafter referred to as meta-data-size information) 19 that is contained in the contents-data section 12.

Also, the meta-data section 13 comprises frame-meta data 20 for each frame that comprises object-data-number information 21 and object data 22 for each frame of the frame group.

Particularly, as shown in FIG. 3, the object data 22 comprises filming-range information that shows whether or not the object being filmed by the imaging-camera apparatus 120 is in the filming range, and speech information that shows whether or not there is current speech for the object being filmed, as well as attribute data containing ID information (hereafter referred to as the object ID) for identifying each object, information (hereafter referred to as name information) that gives the names of the objects to which the data-transmission apparatuses 110 are attached, and information indicating various attributes such as the age, occupation, gender and personality (hereafter referred to as age information, occupation information, gender information and personality information) of the objects to which the data-transmission apparatuses are attached.

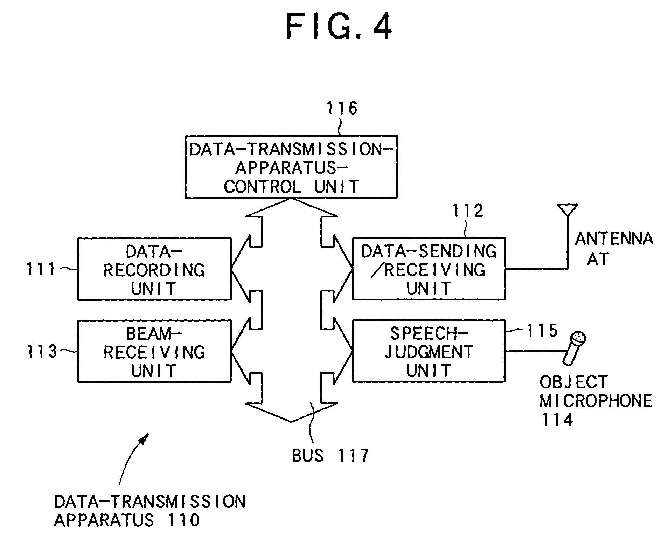

Next, FIG. 4 is used to explain the construction of the data-transmission apparatuses of the editing system of this embodiment. FIG.4 is a bloc kdiagram showing the construction of a data-transmission apparatus of this embodiment.

As shown in FIG. 4, the data-transmission apparatus 110 of this embodiment comprises: a data-memory unit 111 that stores attribute data; a data-sending/receiving unit 112 that is connected to the antenna AT and sends or receives object data 22, as well as sends or receives various data related to the sending or receiving of that object data 22; a beam-receiving unit 113 for receiving a beam that was sent from the imaging-camera apparatus 120 for setting the filming range (hereafter referred to as the filming-range-setting beam); an object microphone 114 that picks up sound from the object to which the data-transmission apparatus 110 is attached; a speech-judgment unit 115 that determines whether or not there is speech from the object based on sound input to the object microphone; and a data-transmission-control unit 116 that together with generating object data, performs control of each unit in order to send the generated object data to the imaging-camera apparatus 120; and where all of units are connected by a bus 117.

Here, for example, the data-memory unit 111 of this embodiment forms the memory means of this invention, and the data-sending/receiving unit (112,128) forms the transmission means of the invention. Also, for example, the beam-receiving unit 113 of this embodiment forms the optical-beam-receiving means of this invention, and the object microphone 114 forms the sound-source microphone of this invention. Furthermore, for example, the speech-judgment unit 115 of this embodiment forms the judgment means of this invention.

Attribute data that gives the attributes of the object to which the data-transmission apparatus 110 is attached and that is sent by a communications terminal such as a personal computer (not shown in the figures) is input to the data-memory unit 111 by way of the data-sending/receiving unit 112, and that input attribute data is recorded in the data-memory unit 111.

More specifically, the attribute data of the object data 22 described above, or in other words, the object ID, name information, age information, occupation information, gender information and personality information are stored in this data-memory unit 111.

Also, in order to generate object data 22, this data-memory unit 111 outputs the stored attribute data to the control unit 116 for the data-transmission apparatus according to an instruction from that control unit 116 for the data-transmission apparatus.

The data-sending/receiving unit 112 is connected to the antenna AT, and using a specified communications format such as wireless tag, Bluetooth (registered trademark) or the like, it performs data communication with the imaging-camera apparatus 120 or with a communications terminal apparatus such as a personal computer (not shown in the figures), and sends and receives object data 22.

Particularly, as will be described later, object data 22 that is generated by the control unit 116 for the data-transmission apparatus is input to the data-sending/receiving unit 112, and this data-sending/ receiving unit 112 performs a specified encoding process such as AES (Advanced Encryption Standard), DES (Data Encryption Standard) or the like on the input object data 22, and sends the encrypted obj ect data 22 to the imaging-camera apparatus 120.

Also, when the data-sending/receiving unit 112 sends or receives object data 22 containing attribute data to or from the imaging-camera apparatus 120, it sends or receives specified data for verification of the data communication.

That is, the data-sending/receiving unit 112 sends identification information (hereafter referred to as ID information) to the imaging-camera apparatus 120 that comprises a number for identifying the data-sending/receiving unit from other data-sending/receiving units 112 together with data that is necessary when performing that verification, and also receives data for verification sent from the imaging-camera apparatus 120 and outputs that received data to the control unit 116 for the data-transmission apparatus.

The process for verification by the data-sending/receiving unit 112 (hereafter referred to as the verification process) and its operation will be explained in detail later.

The beam-receiving unit 113 is such that it receives the filming-range-setting beam (described later) that is sent from the imaging-camera apparatus 120, and when this filming-range-setting beam is received, outputs a notification to the control unit 116 for the data-transmission apparatus that the filming-range-setting beam has been received.

The object microphone 114 is such that it is used when determining whether or not there is speech by the object to which the data-transmission apparatus 110 is attached, and it picks up the speech from that object and outputs the picked up sound to the speech-judgment unit 115 as an audio signal.

The audio signal that is output from the obj ect microphone 114 is input to the speech-judgment unit 115, and this speech-judgment unit 115 determines whether or not there is speech from the object to which the data-transmission apparatus 110 is attached based on whether or not there is an input audio signal, and then outputs the judgment results to the control unit 116 for the data-transmission apparatus.

The control unit 116 for the data-transmission apparatus mainly comprises a central processing unit (CPU) and a memory, and when sending or receiving various data, it performs overall control of the general functions.

Particularly, in this embodiment, the control unit 116 for the data-transmission apparatus receives the image-range-setting beam that is input from the beam-receiving unit 113 described above, and generates object data based on the judgment result by the speech-judgment unit 115 and attribute data that is stored in the data-memory unit 111, and then outputs that generated object data 22 to the imaging-camera apparatus 120 by way of the data-sending/receiving unit 112.

More specifically, when a notification is input that an filming-range-setting beam has been received by the beam-receiving unit 113, the control unit 116 for the data-transmission apparatus determines that the object is in the filming range, and when a notification that a filming-range-setting beam has been received by the beam-receiving unit 113 is not input, it determines that the object is not in the filming range, and then generates filming-range information indicating whether or not the object is in the filming range. Also, based on the judgment results input from the speech-judgment unit 115, the control unit 116 for the data-transmission apparatus generates speech information indicating whether or not there is current speech from the object.

Also, as shown in FIG. 3, the control unit 116 for the data-transmission apparatus generates object data based on filming-range information and speech information generated as described above, as well as based on attribute data acquired from the data-memory unit 111 and comprising object ID, name information, age information, occupation information, gender information and personality information, and outputs that generated object data 22 to the imaging-camera apparatus 120.

On the other hand, according to an instruction from the imaging-camera apparatus 120, the control unit 116 for the data-transmission apparatus sends specified data to the data-sending/receiving unit 112 for verifying that the data-transmission apparatus 110 is able to access the imaging-camera apparatus 120.

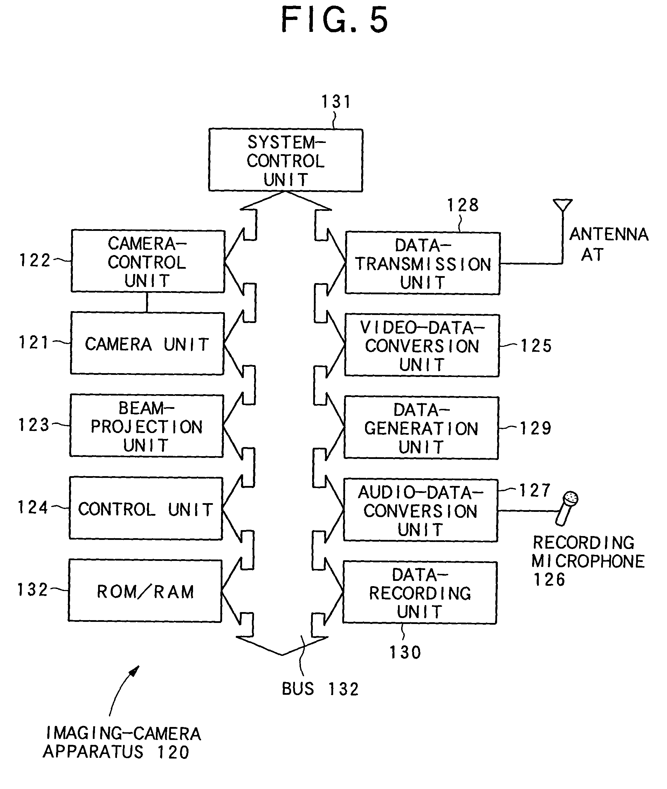

Next, FIG. 5 will be used to explain the construction of the imaging-camera apparatus of the editing system of this embodiment. FIG. 5 is a block diagram showing the construction of the imaging-camera apparatus of this embodiment.

As shown in FIG. 5, the imaging-camera apparatus 120 of this embodiment comprises: a camera unit 121 having a camera lens and that acquires an image by way of that camera lens using an electronic signal; a camera-control unit 122 that controls the camera unit 121; a beam-projection unit 123 that projects a filming-range-setting beam in a preset range; an operation unit 124 that is used for filming in the field of view of the camera lens; a video-data-conversion unit 125 that converts the electronic signal of the images acquired by the camera unit 121 (hereafter referred to as the image signal) to video data having a preset format; a pick-up microphone 126 that picks up sound such as speech from the object being filmed; an audio-data-conversion unit 127 that converts the audio signal acquired by the pick-up microphone 126 to audio data having a preset format; a data-communication unit 128 that receives object data 22 that contains the attribute data that is sent from the data-transmission apparatus 110, and sends or receives various data related to receiving of that object data 22; a data-generation unit 129 that generates a video stream based on the audio data and object data 22; a data-recording unit 130 in which the generated video stream 1 is recorded; a system-control unit 131 that controls each unit, and ROM/RAM 132 that is used when performing each process, and where each of the units is connected via a bus 132.

Here, for example, the camera unit 121 of this embodiment forms the filming means of this invention, and the beam-projection unit 123 forms the projection means of the invention. Moreover, for example, the video-data-conversion unit 125 and audio-data-conversion unit 127 of this embodiment form the acquisition means and data-acquisition means of this invention, and the pick-up microphone 126 forms the pick-up microphone 126 of the invention. Furthermore, for example, the data-communication unit 128 forms the receiving means of this invention, and the data-recording unit 130 of this embodiment forms the recording means of the invention.

The camera unit 121 comprises an imaging element (hereafter referred to as a CCD (Charge Coupled Device)) that performs photoelectric conversion for each picture element of the image formed by the camera lens, and a buffer for temporarily storing the signal for each picture element for which photoelectric conversion was performed, and it forms an image of the field of view formed by focusing light by the camera lens and performs photoelectric conversion of the formed image of the field of view, then stores it temporarily in the buffer, and outputs a video signal having a specified format for each frame (described later) to the video-data-conversion unit 125.

This camera unit 121 is mechanically connected to the finder F shown in FIG. 1, and when the user looks through the finder F, it is possible to check the image of the field of view formed by the camera lens.

During the imaging process, or in other words, when recording video data and corresponding audio data in the data-recording unit 130, the beam-projection unit 123 projects a filming-range-setting beam on the range that corresponds to the filming range for which filming is performed by the camera unit 121 according to control by the camera-control unit 122.

More specifically, this beam-projection unit 123 is such that it projects a laser beam that opens up in a conical shape along the filming range of the image formed by the camera lens.

In order for the imaging-camera apparatus 120 to take precise images of the field of view desired by the user, the camera-control unit 122 performs control of the camera lens and all other parts of the camera unit that are not shown in the figures based on instructions from the user that were input by way of the operation unit 124, and together with controlling the camera unit 121, it controls the beam-projection unit 123 such that it projects the filming-range-setting beam on the range for which an image is to be formed by the camera lens.

The operation unit 124 comprises: a plurality of keys such as control buttons for controlling the camera unit 121, a confirmation button for confirming and selecting arbitrary settings, selection buttons and number keys, and when buttons or keys are pressed, it outputs the signal corresponding to that button or key to the camera-control unit 122 or system-control unit 131.

In this embodiment, when this operation unit 124 is used to perform settings and controls, the control contents or setting contents by the operation unit 124 are displayed on the screen of the finder F.

The video signal output from the camera unit 121 is input to the video-data-conversion unit 125, and this video-data-conversion unit 125 converts the input video signal to a digital signal for each frame, and converts it to video data having a specified format, then outputs the converted video data to the data-generation unit 129.

The pick-up microphone 126 is such that it picks up speech spoken by the object and the sound surrounding the imaging-camera apparatus 120, and converts the picked up sound to an electronic signal (hereafter referred to as the audio signal) and outputs it to the audio-data-conversion unit 127.

The audio signal output from the pick-up microphone 126 is input to the audio-data-conversion unit 127, and this audio-data-conversion unit 127 converts the input audio signal to audio data corresponding to the video data for each frame having a specified format, and then outputs the converted audio data to the data-generation unit 129.

The data-communication unit 128 is connected to the antenna AT, and by performing data communication with the data-transmission apparatus 110 using a specified communications format such as wireless tag, Bluetooth (registered trademark) or the like, sends or receives object data 22 containing attribute data similar to the data-transmission apparatus 110.

Particularly, the data-communication unit 128 is such that it receives encoded object data 22 and decodes that received object data, then outputs specified object data 22 to the data-generation unit 129.

More specifically, the data-communication unit 128 determines whether or not the object ID for each of the encoded object codes 22 is different than the object ID registered for the previous frame, and when there is object code 22 that has an object ID that is different than the object ID registered for the previous frame, it outputs that object code 22 to the data-generation unit 129.

At this time, when there is no object ID for any of the object data 22 that is different than the object ID registered for the previous frame, the data-communication unit 128 does not output any object data 22 to the data-generation unit 129, and outputs a notification that the object code 22 is the same as that of the previous frame.

Also, when sending or receiving object data 22 to or from the data-transmission apparatus 110, as in the case of the control-unit 116 for the data-transmission apparatus 110, the data-communication unit 128 is such that it sends or receives specified data for verification of the data communication with the data-transmission apparatus 110.

The process for verifying communication with the data-sending/receiving unit 112 of this embodiment (hereafter referred to as the verification process) and its operation will be explained in detail later.

Video data, audio data and object data are input to the data-generation unit 129, and based on the input video data, audio data and object data 22, this data-generation unit 129 generates a video stream 1 having a specified format such as MPEG (Motion Picture Experts Group) or DV (Digital Video) , and outputs the generated video stream 1 in order to the data-recording unit 130.

More particularly, as mentioned above, this data-generation unit 129 multiplexes the video data and audio data for each frame (hereafter this multiplexing will be referred to as the multiplexing process), and together with generating preset frame-group data 10 of about 1 to 15 frames, it generates a video stream 1 based on the generated frame-group data 30.

For example, as described above, the data-generation unit 129 of this embodiment is such that it generates frame-group data 10 for a frame group of about 1 to 15 frames that comprises: a header section 11 in which specified data is recorded that is related to the contents data recorded in the frame-group data 10; a contents-data section 12 that contains video data and audio data for each frame; and a meta-data section 13 that contains the object data 22.

The data-recording unit 130, for example, comprises a hard disc (hereafter referred to as HD), and the video stream 1 that was generated by the data-generation unit 129 is input into this data-recording unit 130.

The system-control unit 131 mainly comprises a central processing unit (CPU) , and when sending or receiving various data, or when recording video data and audio data, it performs overall control of general functions.

Particularly, when receiving object data 22, the system-control unit 131 controls the data-communication unit 128, and performs control of receiving the object data 22 and control of the verification process, and when recording video data and audio data, it performs control of recording the data, or in other words, performs control of generating and recording the video stream 1.

The verification process by the system-control unit 131 of this embodiment, and the process of recording video data and audio data (hereafter referred to as the recording process) will be explained in detail later.

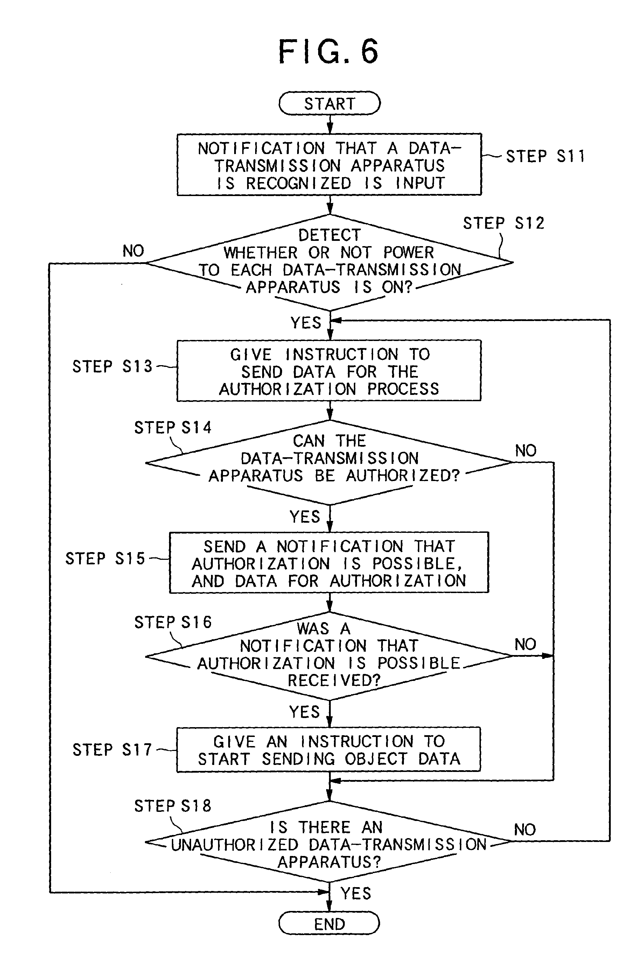

Next, FIG. 6 will be used to explain the control by the system-control unit in the verification process of the imaging-camera apparatus of this embodiment, and the operation of each part.

FIG. 6 is a flowchart showing the control by the system-control unit in the verification process of the imaging-camera apparatus of this embodiment, and the operation of each part.

First, after the system-control unit 131 turns ON the power to the imaging-camera apparatus 120 by way of the operation unit 124, or after an operation is performed using the operation unit 124 to notify that the data-transmission apparatus 110 has been recognized, and after that notification that the data-transmission apparatus 110 has been input to the system-control unit 131 (step S11), the system-control unit 131 detects by way of the data-communication unit 128 whether or not there is power to each data-transmission apparatus 110 (step S12).

That is, after the power has been turned ON, the data-transmission apparatus 110 sends a signal notifying that the power to the data-transmission apparatus 110 has been turned ON (hereafter this is referred to as the power-ON signal), and sends ID information to identify it from other data-transmission apparatuses 110; so by receiving the power-ON signal and the ID information, the system-control unit 131 detects whether or not the sent ID information is from a data-transmission apparatus 110 that is not a data-transmission apparatus 110 that has already been verified.

At this time, when the system-control unit 131 detects a data-transmission apparatus 110 having ID information for which verification has not yet been performed, it goes to the process of step S13, and when it detects a data-transmission apparatus 110 having ID information for which verification has already been performed, or when it does not receive any ID information from any data-transmission apparatus 110, it stops the verification process and ends this operation.

When the system-control unit 131 detects only data-transmission apparatuses 110 having ID information for which verification has already been performed, or when it does not receive ID information from any data-transmission apparatus 110, it displays a notification of that on the monitor in the finder F.

Next, when the system-control unit 131 detects an unverified data-transmission apparatus 110, that system-control unit 131 performs the following operation for each data-transmission apparatus 110. When the system-control unit 131 detects a plurality of data-transmission apparatuses 110, it performs the following verification process of the data-transmission apparatuses 110 in the order of the most recent ID information.

First, the system-control unit 131 sends an instruction to the data-transmission apparatus 110 via the data-communication unit 128 to send various data for performing the verification process to the system-control unit 131 (step S13).

At this time, based on the sent instruction, the data-transmission apparatus 110 that received that instruction to send data for performing the verification process encodes the various internally stored data for performing the verification process, and sends it to the imaging-camera apparatus 120.

Next, after the system-control unit 131 receives data from the data-transmission unit 110 by way of the data-communication unit 128 in order to perform the verification process, it decodes that data, and as described above, performs the verification process to check whether or not this data-transmission apparatus 110 can be verified (step S14), and when it is determined that this data-transmission apparatus 110 cannot be verified, the system-control unit 131 stops the verification process for verifying that data-transmission apparatus 110 and goes to the process of step S15.

When the system-control unit 131 determines that verification is not possible, it displays a notification of that on the monitor located in the finder F.

On the other hand, when the system-control unit 131 determines that this data-transmission apparatus 110 can be verified, the system-control unit 131 encodes a notification that the data-transmission apparatus 110 can be notified, and encodes various internally stored data for performing the verification process, then sends that data to the data-transmission apparatus 110, and waits for data to be sent from the data-transmission apparatus 110 (step S15).

At this time, after the data-transmission apparatus 110 receives the data from the imaging-camera apparatus 120 for performing the verification process, it decodes that data, and as described above, performs the verification process of whether or not that imaging-camera apparatus 120 can be verified, and when the data-transmission apparatus 110 determines that the imaging-camera apparatus 120 cannot be verified, it stops the verification process and sends a notification to that imaging-camera apparatus 120 that that imaging-camera apparatus 120 cannot be verified. On the other hand, when the data-transmission apparatus 120 determines that that imaging-camera apparatus 120 can be verified, it sends a notification that verification is possible.

Next, the system-control unit 131 determines whether or not the data received by the system control unit 131 by way of the data-communication unit 128 is a notification that verification is not possible, or a notification that verification is possible (step S16) , and when a notification that verification is not possible is received, the system-control unit 11 stops the verification process for that data-transmission apparatus 110 and goes to the process of step S15.

When the system-control unit 131 receives a notification that verification is not possible, it displays that notification on the monitor located in the finder F.

On the other hand, when the system-control unit 131 receives a notification that verification is possible, it sends an instruction to that data-transmission apparatus 110 to send the object data 22 generated by the data-transmission apparatus 110 (step S17).

Finally, the system-control unit 131 determines whether or not there are still data-transmission apparatuses 110 for which verification has not yet been performed (step S18), and when there are data-transmission apparatuses 110 for which verification has not yet been performed, it goes to the process of step S12, and when there are no data-transmission apparatuses 110 for which verification has not yet been performed, it ends this operation.

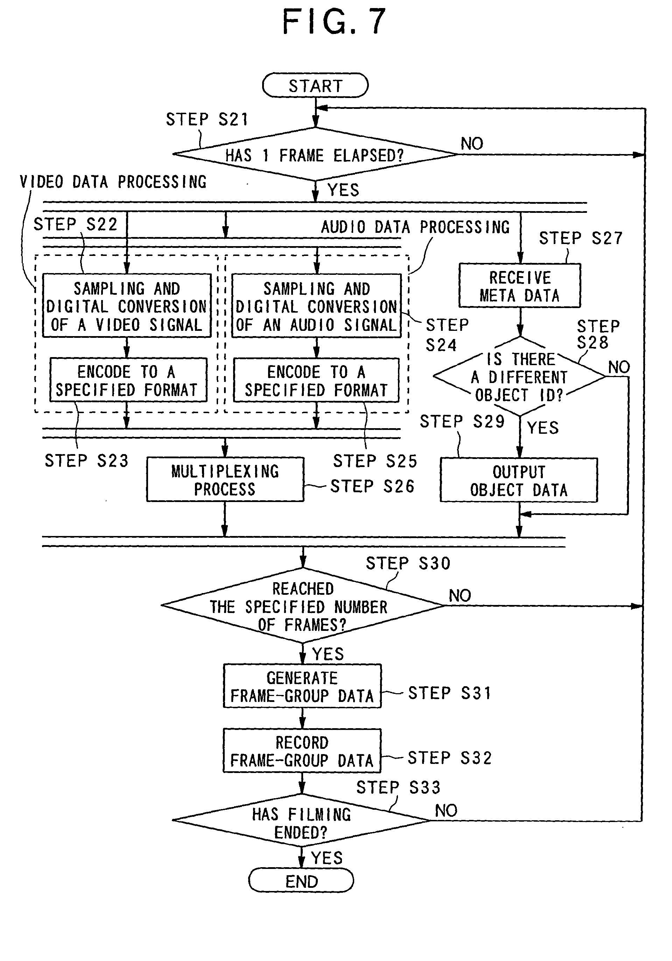

Next, FIG. 7 will be used to explain the control by the system-control unit in the recording process of the imaging-camera apparatus of this embodiment, and the operation of each part.

FIG. 7 is a flowchart showing the control by the system-control unit in the recording process of the imaging-camera apparatus of this embodiment, and the operation of each part.

Here it will be presumed that all of the attribute data is already stored in the data-transmission apparatus 110, that the data-transmission apparatus 110 has already been verified by the verification process described above, and that the object data 22 has been sent to the imaging-camera apparatus 120.

First, when the user controls the operation unit 124 to give an instruction to the system-control unit 131 to start filming, the system-control unit 131, based on an internally generated reference clock, determines whether or not the time amount for one frame has elapsed (step S21), and when it determines that the time amount for one frame has not yet elapsed, it repeats that process, and when it determines that the time amount of for one frame has elapsed, then it executes the following process for each frame.

At this time, the camera unit 121 performs photoelectric conversion of the image of the field of view formed by the CCD and lens for each picture element, and stores the signal of the photo-electrically converted picture elements in the internal buffer.

Next, when the system-control unit 131 determines, based on the reference clock, that the amount of time of one frame has elapsed, it has the camera unit 121 output the signal for each of the pixels to the video-data-conversion unit 125, and has the video-data-conversion unit 125 and the audio-data-conversion unit 127 execute video-data processing and audio-data processing, respectively, and to output both the processed video data and audio data to the data-generation unit 129 (steps S22 to S26).

More specifically, the video-data-conversion unit 125 samples the input video signal using a specified period and converts it to a digital signal (step S22), and then encodes the converted digital signal into a specified format and outputs it to the data-generation unit 129 (step S23) . Also, the audio-data-conversion unit 127 samples the input audio signal using a specified period and converts it to a digital signal (step S24), and then encodes the converted digital signal into a specified format and outputs it to the data-generation unit 129 (step S25). Furthermore, as described above, the system-control unit 131 has the data-generation unit 129 multiplex the video data and audio data for that frame (multiplexing process (step S26)).

On the other hand, the system-control unit 131 has the data-communication unit 128 receive each object data 22 (step S27) and determine whether or not the object ID in each received object data 22 is different than the object ID registered for the previous frame (step S28) and when the object data 22 has an object ID that is different than the object ID registered for the previous frame, it has the data-communication unit 128 output that object data 22 to the data-generation unit 129 (step S29).

At this time, when the data-communication unit 128 determines that there is no object data having an object ID that is different than the object ID registered for the previous frame, the data-communication unit 128 does not output any object data 22 to the data-generation unit 129, and outputs a notification to the data-generation unit 129 that the object data is the same as that of the previous frame. Also, the system-control unit 131 performs the video-data processing and audio-data processing at the same time, and performs the video processing and audio processing, including the process of generating the video stream 1, at the same time as the process of acquiring object data 22.

Next, the system-control unit 131 uses that frame of the generated video stream 1 to determine whether or not that frame has reached the specified number of frames of the frame group to which the frame belongs (step S30).

When it is determined using the frame of contents data generated by the data-generation unit 129 that the frame has not reached the specified number of frames for the frame group, the system-control unit 131 goes to the process of step S21, and has the data-generation unit 129 generate contents data for the next frame.

On the other hand, when it is determined using the frame of the contents data generated by the data-generation unit that that frame has reached the specified number of frames of the frame group, the system-control unit 131 has the data-generation unit 129 generate a header section 11 from data other than the object data 22 as described above, and based on each object data 22, generate a meta-data section 13, and then based on the contents data for each frame and that meta-data section 13 and header section 11, generate frame-group data 10 (step S31).

When there is no object data in any of the object data 22 that is different than the object data registered for the previous frame, and a notification is input to the data-generation unit 129 that the object data 22 is the same as that of the previous frame, the data-generation unit 129 generates the meta-data section 13 for that frame based on the object data 22 of the previous frame.

Next, the system-control unit 131 has the data-generation unit 129 output the generated frame-group data 10 to the data-recording unit 130, and records that frame-group data 10 in the data-recording unit 130 (step S32).

Finally, based on other control from the operation unit 124, the system-control unit 131 determines whether the filming process has ended (step S33) , and when it determines that the filming process is continuing, it goes to the process of step S21, and when it determines that the filming process has ended, it ends this operation.

In the embodiment described above, the image-recording system 100 is an image-recording system 100 that records at least the sound generated from a sound source or video acquired by filming a target object as contents data, and comprises: a data-transmission apparatus 110 that is attached to at least the sound source or the object, and sends object data 22 that indicates the attributes of at least that sound source or that object; and an imaging-camera apparatus 120 that correlates and records at least the sound generated from the sound source or acquired video of the object to which the data-transmission apparatus 110 is attached.

With this construction, the image-recording system 100 of this embodiment correlates the object data 22, which is sent from the data-transmission apparatus 110 that is attached to the sound source or object, with the sound generated from the sound source or the video taken of the object, and records it.

Also, when recording the sound source or object, the object data 22 of that sound source or object can be correlated with the sound source or object and recorded, so when editing the recorded sound source or video of the object, such as when analyzing the recorded video story, or when reproducing a summary that accurately provides the contents while at the same time shortens the reproduction time of the recorded video, it is possible to perform recording or reproduction based on that object data 22.

The image-recording system 100 of this embodiment is constructed such the imaging-camera apparatus 120 comprises: a camera unit 121 that films an object; a video-data-conversion unit 125 that acquires images of the field of view of the filmed object as contents data; a data-communication unit 128 that receives object data 22 that is sent from the data-transmission apparatus 110; and a data-recording unit 130 that records the acquired video data, and correlates and records the received object data 22 with the recorded video data.

With this construction, the image-recording system 100 of this embodiment together with acquiring the image of the field of view of the object as contents data, receives object data 22 sent from the data-transmission apparatus 110, and when recording the acquired video data, correlates and records the received obj ect data 22 with that video data to be recorded.

Also, when recording the object, it is possible to correlate and record the object data 22 for that object with speech that is made by the object, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Moreover, the image-recording system 100 of this embodiment is constructed such that when the video-data-conversion unit 125 of the imaging-camera apparatus 120 acquires the images of the field of view of the object as video data comprising a plurality of frames, the object data 22 is correlated with the video data for each frame and recorded in the data-recording unit 130.

With the image-recording system 100 of this embodiment having this construction, object data 22 is correlated and recorded with the video data, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Furthermore, the image-recording system 100 of this embodiment is constructed such that the imaging-camera apparatus 120 comprises: a pick-up microphone 126 that picks up the sound generated from the sound source; an audio-data-conversion unit 127 that acquires the sound picked up by the microphone as contents data; a data-communication unit 128 that receives the object data 22 sent from the data-transmission apparatus 110; and a data-recording unit 130 that together with recording the acquired audio data, correlates and records the received object data 22 with that audio data to be recorded.

With this construction, the image-recording system 100 of this embodiment acquires the sound generated from the sound source as contents data, as well as receives object data 22 sent from the data-transmission apparatus 110, and when recording the acquired audio data, it correlates and records the received obj ect data 22 with that audio data to be recorded.

Also, when recording the sound generated from the object, the object data 22 of the object is correlated with the spoken speech or object and recorded, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Furthermore, the imaging-camera apparatus 120 of this embodiment is constructed such that when the audio-data-conversion unit 127 acquires the picked up sound as audio data comprising a plurality of frames, it correlates and records the obj ect data 22 with the audio data to be recorded for each frame.

With the imaging-camera apparatus 120 of this embodiment having this construction, object data 22 is correlated with the audio data for each frame and recorded, so when editing or reproducing the recorded sound source or the video of the object, it is possible to perform recording or reproduction based on that object data 22 for each frame.

Also, the imaging-camera apparatus 120 of this embodiment is constructed such that the data-communication unit 128 receives ID information for identifying the object being filmed from other objects, name information that indicates the name of the object, age information indicating the age of the object, occupation information indicating the occupation of the object, gender information indicating the gender of the object, and personality information indicating the personality of the object as attribute information.

In this embodiment having this construction, attribute information such as the ID information can be recording in the data-recording unit 130 together with the video data or audio data, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Also, the imaging-camera apparatus 120 of this embodiment is constructed such that it further comprises a beam-projection unit 123 that projects an optical beam on the filming range in which filming can be performed by the camera unit 121.

As described above, with the imaging-camera apparatus 120 of this embodiment having this construction, by determining whether or not the data-transmission apparatus 110 is in the filming range, and then sending that information to the imaging-camera apparatus 120, the imaging-camera apparatus 120 is able to record this judgment result together with the video data in the data-recording unit 130, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Also, the imaging-camera apparatus 120 of this embodiment is constructed such that when optical-beam information is sent from the data-transmission apparatus 110 that is attached to the object indicating that the optical beam projected from the beam-projection unit 123 has been received, the data-communication unit 128 receives the optical-beam information together with the attribute information, and records the optical-beam information in the data-recording unit 130 together with the attribute information.

As described above, with the imaging-camera apparatus 120 of this embodiment having this construction, by determining whether or not the data-transmission apparatus 110 is in the filming range, and then sending that information to the imaging-camera apparatus 120, the imaging-camera apparatus 120 is able to record this judgment result together with the video data in the data-recording unit 130, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Also, the imaging-camera apparatus 120 of this embodiment has a pick-up microphone 126 that picks up the sound generated from the sound source when the audio-data-conversion unit 127 acquires the sound generated from the sound source as contents data, and it acquires the sound picked up by the microphone as contents data.

The imaging-camera apparatus 120 of this embodiment having this construction, acquires sound generated from the sound source as contents data, as well as receives object data 22 sent from the data-transmission apparatus 110, and when recording the acquired audio data, it correlates and records the received object data 22 with that audio data to be recorded.

Also, when recording the sound generated from the object, the object data 22 of the object can be correlated and recorded with the spoken sound or object, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Moreover, the imaging-camera apparatus 120 of this embodiment is constructed such that the data-communication unit 128 receives speech information together with attribute information, and records the speech information together with the attribute information in the data-recording unit 130.

In this embodiment having this construction, speech information is recorded together with the video data or audio data in the data-recording unit 130, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

Also, the imaging-camera apparatus 120 of this embodiment is constructed such that when the data-communication unit 128 sends or receives contents data to or from a data-transmission apparatus 110, it determines whether or not the data-transmission apparatus 110 is able to send or receive those contents data.

With the imaging-camera apparatus 120 of this embodiment having this construction, when sending or receiving contents data to or from a data-transmission apparatus 110, it determines whether or not the data-transmission apparatus 110 is able to send or receive those contents data, so it is possible to prevent the object data 22 that is sent by the data-transmission apparatus 110 from escaping to the outside unintentionally.

Furthermore, the data-transmission apparatus 110 of this embodiment is constructed such that it comprises a beam-receiving unit 113 that receives an optical beam, and a data-sending/receiving unit 112 that sends filming-range information to the imaging-camera apparatus 120 indicating that that an optical beam has been received.

With the imaging-camera apparatus of this embodiment having this construction, by sending filming-range information to the imaging-camera apparatus 120 and having that imaging-camera apparatus 120 record this judgment result in the data-recording unit 130 together with the video data, it is possible to determine whether or not the object to which the data-transmission apparatus 110 is attached is in the filming range, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

The data-transmission apparatus 110 of this embodiment is constructed such that it comprises an object microphone 114 that picks up sound generated from the sound source, and a speech-judgment unit 115 that determines whether or not there is sound output from the sound source based on sound picked up by the object microphone 114, and where the data-sending/receiving unit 112 sends speech information to the imaging-camera apparatus 120 indicating the judgment result determined by the speech-judgment unit 115.

With the data-transmission apparatus 110 of this embodiment having this construction, speech information indicating the judgment result determined by the speech-judgment unit 115 can be sent to the imaging-camera apparatus 120, and this speech information is recorded in the data-recording unit 130 together with the audio data or video data, so when editing the recorded sound source or the video of the object, such as when analyzing the recorded video story, or when reproducing a summary that accurately provides the contents while at the same time shortens the reproduction time of the recorded video, it is possible to perform recording or reproduction based on that object data 22.

The data-transmission apparatus 110 of this embodiment can be attached to objects, including characters, and of course, the data-transmission apparatus can also be attached to small or large equipment used when filming.

In this case, the data-transmission sends object data 22 that includes object data containing the equipment ID, equipment name, and equipment owner's name to the imaging-camera apparatus 120.

Also, in this embodiment, the invention is used when filming contents data that will be broadcast such as a drama or movie, however, of course the invention is not limited to contents data such as a drama, and could be used for a documentary or as a consumer device. In this case, characteristic information about the object recorded such as the age and name is stored in the object data 22.

Also, in this embodiment, object data 22 is stored in the data-transmission apparatus 110 by way of an external communication terminal apparatus, however, it is also possible to have a control-input unit located in the data-transmission apparatus 110 that comprises a plurality of keys such as confirmation buttons, selection buttons, number keys and the like, and to store the object data 22 in the data-memory unit 111 by operating the control-input unit.

In this case, in order to aid in the control input, it is also possible to have a display unit that is used for controlling the input of the control-input unit, checking the attribute information to store, etc.

Also, in this embodiment, control of each unit in the verification process and control of each unit in the recording process by the system-control unit 131 is executed by the system-control unit 131, however, by having a recording medium on which a program is recorded for regulating the recording process and having a computer that can read that program, it is possible to execute the same recording process as described above by having the computer read that program.

### [2] Embodiment 2

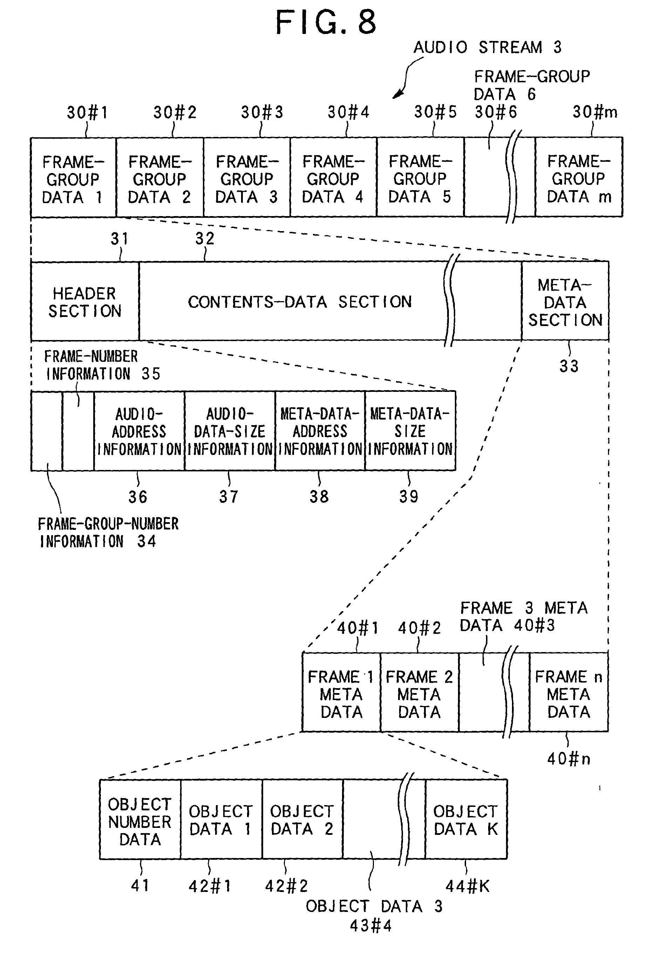

Next, FIG. 8 to FIG. 12 will be used to explain a second embodiment of a data-recording system 200.

The editing system of this embodiment differs from the first embodiment in that instead of the imaging-camera apparatus recording object data that is sent from the data-transmission apparatus together with contents data that contains both video data and audio data, the data-recording apparatus records object data that is sent from the data-transmission apparatus together with contents data that contains only audio data, and the other construction is the same as that of the first embodiment, so the same reference numbers will be given to identical parts and an explanation of them will be omitted.

In this embodiment,recording an instrumental performance such as that of an orchestra will be explained, and the case where the data-transmission apparatus is attached to an instrument will be explained.

The data-recording system 200 of this embodiment comprises a data-transmission apparatus 210, and data-recording apparatus 220 that records object data together with the audio stream.

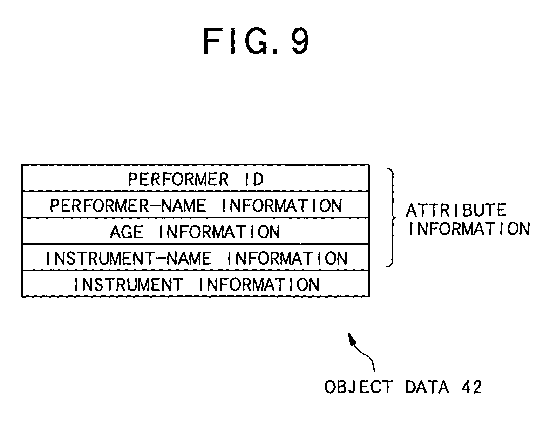

First FIG. 8 and FIG. 9 will be used to explain the contents data and object data recorded by the data-recording apparatus.

FIG. 8 is a drawing showing an example of the structure of the audio stream that the data-recording apparatus records in the data-recording unit, and FIG.9 is a drawing showing an example of the object code that is sent from the data-transmission apparatus to the data-recording apparatus.

Based on the input audio data and object data 22, the data-recording apparatus 22 of this embodiment generates an audio stream 3 that has a specified format as shown in FIG. 8, and records the audio stream of that generated portion.

As in the first embodiment, the audio stream 3 of this embodiment comprises a plurality of frame-group data 30 compiled for each frame group having about 1 to 15 frames, and as shown in FIG. 8, that frame-group data 30, comprises a header section 31, contents-data section 32 that contains audio data for each frame, and meta-data section 33 that contains the object data 22.

More specifically, the header section comprises: frame-group-number information 34 for identifying the order numbers in the audio streams of each frame group and identifying other frame groups; frame-number information 35 that indicates the number of frames recorded for each frame group; address information (hereafter referred to as the audio data address) 36 that indicates the address of each frame in the audio data contained in the contents-data section 32; the amount of audio data (hereafter referred to as the audio-data size) 37 contained in the contents-data section 32; address information (hereafter referred to as the meta-data address) 38 indicating the address of the meta data contained in the contents-data unit 32; and amount of meta data (hereafter referred to as the meta-data size) 39 contained in the contents-data section 32.

Also, as in the first embodiment, the meta-data section 33 comprises frame-meta data 40 for each frame that contains information 41 of the number of object data in each frame of the frame group and that object data 42.

On the other hand, as shown in FIG. 9, each object data 22 contains attribute information such as rumbling information that indicates whether or not rumbling or sound is output from the instrument to which the data-transmission apparatus is attached, performer ID that identifies the performer from other performers, performer name information the indicates that performer's name, age information that indicates the performer's age, and instrument name information that indicates the instrument name.

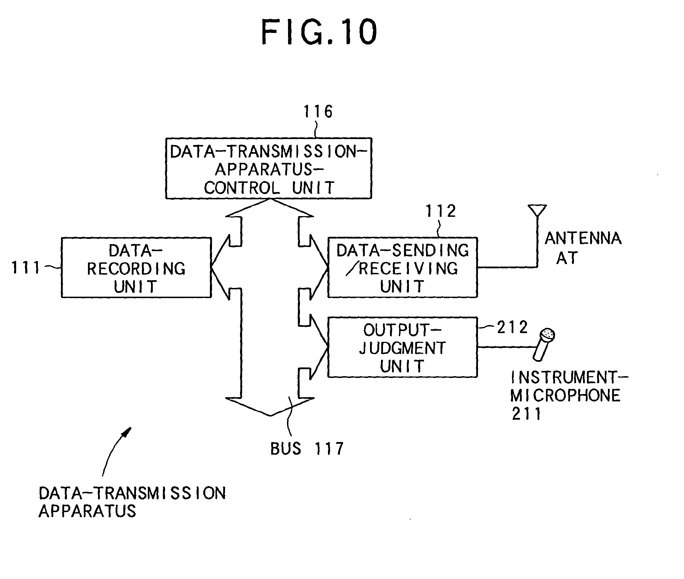

Next, FIG. 10 will be used to explain the construction of the data-transmission apparatus of this embodiment. FIG. 10 is a block diagram showing the construction of the data-transmission apparatus of this embodiment.

The data-transmission apparatus 210 of this embodiment comprises: a data-memory unit 111 that stores the attribute data mentioned above; a data-sending/receiving unit 112 that is connected to an antenna AT and sends or receives object data 42, as well as sends or receives various data related to the sending or receiving of that object data 42; an instrument microphone 211 that acquires sound from the instrument to which the data-transmission apparatus 210 is attached; an output-judgment unit 212 that, based on the sound input to the instrument microphone 211, determines whether or not there is rumbling of the instrument or sound output from the instrument; and a data-transmission-apparatus-control unit 116 that controls each unit.

The instrument microphone 211 and output-judgment unit 212 of this embodiment have the same construction as the object microphone 114 and speech-judgment unit 115 of the first embodiment.

Also, the data-memory unit 111 of this embodiment forms the memory means of the invention, and the data-sending/receiving unit 112 forms the transmission means of the invention. Moreover, the instrument microphone 211 of this embodiment, for example, forms the sound-source microphone of this invention, and the output-judgment unit 212 forms the judgment means of the invention.

Similar to as in the first embodiment, the transmission-apparatus -control unit of this embodiment mainly comprises a central processing unit (CPU) and a memory, and when sending or receiving data, it performs overall control of general functions.

Particularly, in this embodiment, based on the judgment result from the output-judgment unit 212 and the attribute data stored in the data-memory unit 111, the data-transmission apparatus 210 control unit generates object data 42 and outputs that generated object data 42 to the data-recording apparatus 220 by way of the data-sending/receiving unit 112.

More specifically, based on the judgment results input from the output-judgment unit 212, the data-transmission-apparatus 210 control unit generates instrument information that indicates whether or not there is rumbling or sound output from the instrument.

The data-transmission-apparatus 210 control unit generates object data 22 based on attribute data comprising instrument information that is generated as described above, performer ID, performer-name information, age information and instrument name information, and outputs the generated object data 22 to the data-recording apparatus 220.

On the other hand, in order to conform with the first embodiment, the data-transmission apparatus 210 control unit, based on an instruction from the data-recording apparatus 220, sends specified data to the data-sending/receiving unit 112 for verifying that the data-transmission apparatus 210 is an apparatus capable of accessing the data-recording apparatus 220.

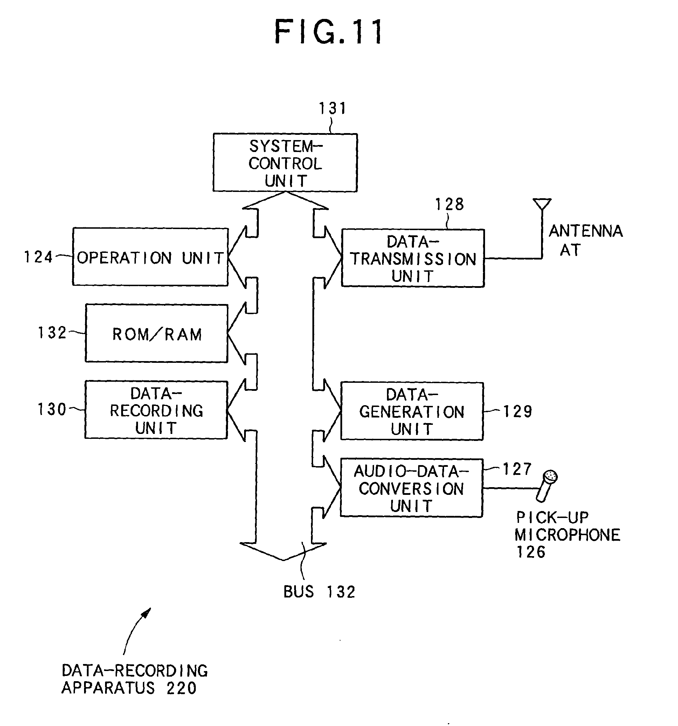

Next, FIG. 11 will be used to explain the construction of the data-recording apparatus of this embodiment. FIG. 11 is a block diagram showing the construction of the data-recording apparatus of this embodiment.

As shown in FIG. 10, the data-recording apparatus 220 of this embodiment comprises: a operation unit 124; a pick-up microphone 126 that picks up sound from an instrument; an audio-data-conversion unit 127 that converts the audio signal acquired by the pick-up microphone 126 to audio data having a specified format; a data-transmission unit 128 that is connected to an antenna AT and that receives the object data 42 that contains attribute data and that was sent from the data-transmission apparatus 210, as well as sends or receives various data related to that object data 42; a data-generation unit 129 that generates an audio stream 3 based on the audio data and object data 42; a data-recording unit 130 that records the generated audio stream 3; a system-control unit 131 that controls each part, and ROM/RAM 132.

The audio-data-conversion unit 127 of this invention, for example, forms the acquisition means and data-acquisition means of this invention, and the pick-up microphone 126 forms the forms the pick-up microphone of the invention. Moreover, the data-communication unit 128, for example, forms the receiving means of this invention, and the data-recording unit 130 of this embodiment forms the recording means of this invention.

The audio data and object data 42 are input to the data-generation unit 129 of this embodiment, and based on the input audio data and object data 42, this data-generation unit 129 generates an audio stream 3 having a specified format, and outputs the generated audio streams 3 in order to the data-recording unit 130.

More specifically, this data-generation unit 129 generates the frame-group data 30 that contains the object data for each frame, and generates an audio stream 3 containing a plurality of this generated frame-group data 30.

For example, as described above, the data-generation unit 129 of this embodiment generates frame-group data 30 for each frame group of about 1 to 15 frames that comprises a header section 31, a contents-data section 32 that contains audio data for each frame, and a meta-data section 33 that contains object data 42.

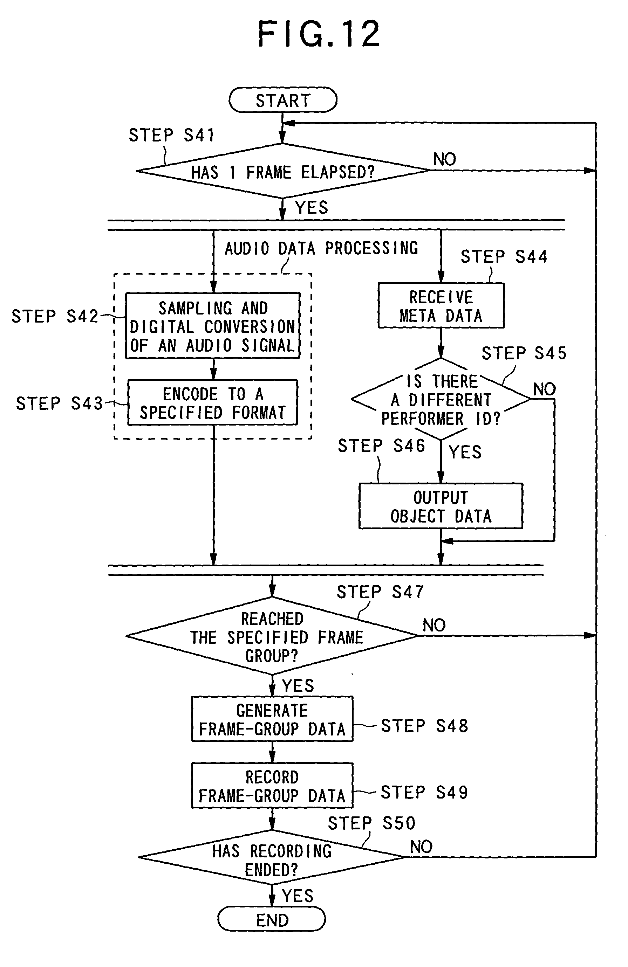

Next, FIG. 12 will be used to explain the control by the system-control unit in the recording process by the data-recording apparatus of this embodiment, and the operation by each part.

FIG. 12 is a flowchart that shows the control by the system-control unit in the recording process by the data-recording apparatus of this embodiment, and the operation by each part.

Also, it is presumed that all of the attribute data is already stored in the data-transmission apparatus 210, that the data-transmission apparatus 210 has already been verified by the verification process described above, and that it sends object data 22 to the data-recording apparatus 220.

First, when the user controls the control unit 24 and sends an instruction to the system-control unit 131 to start recording audio data, the system-control unit 131 determines whether or not the amount of time for one frame has elapsed based on the internally generated reference clock (step S41) , and when it determines that the amount of time of one frame has not yet elapsed, it repeats this process, and when it determines that the amount of time of one frame has elapsed, it executes the following process for each frame.

Next, when the system-control unit 131 determines that the amount of time of one frame has elapsed based on the reference clock, it has the audio-data-conversion unit 127 execute the audio-data process for the audio signal output from the pick-up microphone 126, and output the processed audio data to the data-generation unit 129 (steps S42 and S43) .

More specifically, the audio-data-conversion unit 127 samples the input audio signal using a specified period, and converts it to a digital signal (step S42) , and then encodes the converted digital signal into a specified format and outputs it to the data-generation unit 129 (step S43).

On the other hand, the system-control unit 131 has the data-communication unit 128 receive each object data 42 (step S44) and determine whether or not each object data 42 contains a performer ID that is different than the performer ID that was registered for the previous frame (step S45), and when there is object data having a performer ID that is different than the performer ID that was registered for the previous frame, output that object data 42 to the data-generation unit 129 (step S46).

At this time, when it is determined by the data-communication unit 128 that there is no performer ID in some object data that is different than the performer ID that was registered for the previous frame, the data-communication unit 128 does not output that object data 42 to the data-generation unit 129. Also, the system-control unit 131 performs the audio-data process and judgment process at the same time.

Next, as described above, the system control unit 131 has the data-generation unit 129 generate contents data based on the audio data for each frame, and then determine based on the frames of the generated contents data whether or not the specified number of frames of the frame group to which the frame belongs to has been reached (step S47).

At this time, when the system-control unit 131 determines based on the frame of the contents data generated by the data-generation unit 129 that the specified number of frames for the frame group has not been reached, then the system-control unit 131 goes to the process of step S41 and has the data-generation unit 129 generate the next frame of contents data.

On the other hand, when the system-control unit 131 determines based on the frame of contents data generated by the data-generation unit 129 that the specified number of frames for the frame group has been reached, then as described above, the system-control unit 131 has the data-generation unit 129 generate a header section using data other than the object data 42, and then generate frame-group data 10 based on the contents data for each frame, the object data 42 and that header (step S48).

As in the first embodiment, when there is no performer ID in any of the object data 42 that is different than the performer ID that was registered for the previous frame-group data 10, and that object data 42 is not input to the data-generation unit 129, the data-generation unit 129 generates object data 42 for that frame based on the object data of the previous frame.

Next, the system-control unit 131 has the frame-group data 30 generated by the data-generation unit 129 output to the data-recording unit 130 and records that frame-group data 30 in the data-recording unit 130 (step S49).

Finally, the system-control unit 131 determines based on other control by the operation unit 124 whether or not data recording has ended (step S50), and when it determines that data recording is continuing, it goes to the process of step S41, and when it determines that data recording has ended, it ends this operation.

The data-recording system 200 of this embodiment described above is a data-recording system 200 that records sound generated from a sound source as contents data, and is constructed such that it comprises: a data-transmission apparatus 210 that is attached to the sound source and sends object data 42 that indicates the attributes of the sound source; and a data-recording apparatus 220 that correlates and records the object data 42 sent from the data-transmission apparatus 210 with the sound generated from the sound source to which that data-transmission apparatus 210 is attached.

The data-recording system 200 of this embodiment having this construction correlates and records the object data 42 sent from the data-transmission apparatus 210 attached to the sound source with the sound generated fromthe sound source.

Therefore, when recording the sound source, it is possible to correlate and record the object data 42 of the source with the sound source, so when editing the recorded sound source, such as when analyzing music such as recorded songs, or when accurately reproducing just the sound of an instrument in music such as a recorded song, it is possible to perform recording and reproduction based on that object data 42.

Moreover, the data-recording system 200 of this embodiment is constructed such that the data-recording apparatus 220 comprises: a pick-up microphone 126 that picks up sound generated from a sound source; an audio-data-conversion unit 127 that acquires the sound picked up by the microphone as contents data; a data-communication unit 128 that receives object data 42 sent from the data-transmission apparatus 210; and a data-recording unit 130 that records the acquired audio data and correlates the received object data 42 with the audio data to be recorded and records them.

The data-recording system 200 of this embodiment having this construction acquires sound generated from a sound source as contents data, and receives object data 42 sent from the data-transmission apparatus 210, and when recording the acquired audio data, correlates the received object data 42 with the audio data to be recorded and records them.

Therefore, when recording sound generated from a sound source, it is possible to correlate and record it with sound generated from a sound source such as music, so when editing the recorded sound source, such as analyzing music such as recorded songs, or when accurately reproducing just the sound of an instrument in music such as a recorded song, it is possible to perform recording and reproduction based on that object data 42.

Also, the data-recording apparatus 220 of this embodiment is constructed such that when the audio-conversion unit 127 acquires picked up sound as audio data containing a plurality of frames, the data-recording unit 130 correlates and correlates the object data 42 with the audio data to be recorded for each frame and records them.

With the data-recording apparatus 220 of this embodiment having this construction, object data 42 is correlated with the audio data for each frame and recorded, so when editing the recorded sound source, or when performing reproduction, it is possible to perform recording and reproduction based on that object data 42 for each frame.

Also, the data-recording apparatus 220 of this embodiment is constructed such that the data-communication unit 128 receives ID information for identifying the sound source from which sound is acquired from other sound sources, name information that indicates the name of the sound source, or operator information related to the operator, who operates the sound source in order to output sound from the sound source, as attribute information.

In this embodiment having this construction, attribute information such as ID information can be recorded in the data-recording unit 130 together with audio data, so when editing the recorded sound source, such as when analyzing music such as recorded songs, or when accurately reproducing just the sound of an instrument in music such as a recorded song, it is possible to perform recording and reproduction based on that object data 42.

Also, when the audio-data-conversion unit 127 acquires sound generated from a sound source as contents data, the data-recording apparatus 220 of this embodiment has a pick-up microphone 126 that picks up sound generated from the sound source, and acquires the sound picked up by the microphone as contents data.

The data-recording apparatus 220 of this embodiment having this construction acquires sound generated from a sound source as contents data, as well as receives object data 42 sent from a data-transmission apparatus 210, and when recording the acquired audio data, correlates the received object data with the audio data to be recorded and records them.

Therefore, when recording sound generated from a sound source, it is possible to correlate and record it with sound such as music generated from a sound source, so when editing the recorded sound source, such as when analyzing music such as recorded songs, or when accurately reproducing just the sound of an instrument in music such as a recorded song, it is possible to perform recording and reproduction based on that object data 42.

Furthermore, the data-recording apparatus 220 of this embodiment is constructed such that the data-communication unit 128 receives rumbling information together with the attribute information, and records that rumbling information in the data-recording unit 130 together with the attribute information.

In this embodiment having this construction, this rumbling information is recorded in the data-recording unit 130 together with the audio data, so when editing the recorded sound source, such as when analyzing music such as recorded songs, or when accurately reproducing just the sound of an instrument in music such as a recorded song, it is possible to perform recording and reproduction based on that object data 42.

Also, the data-recording apparatus 220 of this embodiment is constructed such that when the data-communication unit 128 sends or receives contents data to or from the data-transmission apparatus 210, it determines whether or not the data-transmission apparatus is able to send or receive that contents data.

With the data-recording apparatus 220 of this embodiment having this construction, whether or not the data-transmission apparatus 210 is able to send or receive contents data is determined when sending or receiving contents data to or from the data-transmission apparatus 210, so it is possible to prevent object data 42 sent from the data-transmission apparatus from unintentionally flowing to the outside.

The data-transmission apparatus 210 of this embodiment is constructed such that it comprises: an instrument microphone that picks up sound generated from a sound source 211, and an output-judgment unit 212 that, based on the sound picked up using the instrument microphone, determines whether or not there is sound output from the sound source, and the data-sending/receiving unit 112 sends speech information that indicates the judgment result determined by the output-judgment unit 212.

With the data-transmission apparatus 210 of this embodiment constructed as described above, speech information that indicates the judgment result determined by the speech-judgment unit can be sent to the data-recording apparatus 220, so by recording this speech information in the data-recording unit 130 together with audio data or video data when editing the recorded sound source, such as when analyzing music such as recorded songs, or when accurately reproducing just the sound of an instrument in music such as a recorded song, it is possible to perform recording and reproduction based on that object data 42.

This embodiment is used when recording a song that is performed at a concert or in a studio for example, however, of course it is not limited to a song that is performed at a concert or in a studio, and could also be used for conversation, a singing contest, or as a consumer device. In this case, characteristic information such as the age and name of the object being recorded is stored in the object data 42.

Moreover, in this embodiment, object data 42 is recorded in the data-transmission apparatus 210 using a communication terminal from the outside, however, it is also possible to have a control-input unit in the data-transmission apparatus 210 that comprises a plurality of keys such as confirmation buttons, selection buttons, number keys and the like, and record object data 42 in the data-memory unit 111 by controlling this control-input unit.

In this case, there is also a display unit used for displaying the control input of the control-input unit in order to assist in the control input, and for checking the attribute information to be stored.

Also, in this embodiment, the system-control unit 131 executes control of each unit in the verification process, and controls of each unit in the recording process by the system-control unit 131, however, by having a recording medium on which a program is recorded that regulates the operation of the recording process, and a computer that can read it, it is possible to perform the operation of the same recording process described above by having the computer read this program.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. A data-recording system (100) that records at least sound generated from a sound source or video that is acquired by filming a target object, **characterized in that** the data-recording system comprises:
a data-transmission apparatus (110) that is attached to at least said sound source or said object, and that sends attribute data indicating the attributes of at least that sound source or that object; and
a data-recording apparatus (120) that correlates and records attribute data sent from said data-transmission apparatus with at least the sound generated from a sound source to which that data-transmission apparatus is attached, or video acquired by filming an object.

2. The data-recording system (100) according to claim 1 wherein when said data-transmission apparatus (110) is attached to said object;
said data-recording apparatus (120) comprises:
a filming device (121) which films said object;
a data-acquisition device (125) which acquires images of the field of view of said filmed object as contents data;
a receiving device which receives (128) attribute data that is sent from said data-transmission apparatus; and
a recording device (130) which records said acquired video data, as well as correlating and recording said received attribute data with that video data to be recorded.

3. The data-recording system (100) according to claim 2 wherein when said acquisition device (125) of said data-recording apparatus (120) acquires the images of the field of view of said filmed object as video data comprising a plurality of frames;
said recording device (130) of said data-recording apparatus correlates and records said attribute data with said video data for each of said frames.

4. The data-recording system according (100) to claim 1 wherein when said data-transmission apparatus is attached to a sound source;
said data-recording apparatus (120) comprises:
a pick-up-microphone (126) that picks up the sound generated by said sound source;
a data-acquisition device (127) which acquires the sound picked up by said microphone as contents data;
a receiving device (128) which receives attribute data that is sent from said data-transmission apparatus (110); and
a recording device (130) which records said acquired audio data, as well as correlates and records said received attribute data with that audio data to be recorded.

5. The data-recording system (100) according to claim 4 wherein when said acquisition device which said data-recording apparatus acquires the picked up sound as audio data comprising a plurality of frames;
said recording device of said data-recording apparatus correlates and records said attribute data with said audio data to be recorded for each of said frames.

6. A data-recording apparatus (120) **characterized in that** the data-recording apparatus comprises:
an acquisition device (127) which acquires at least sound generated from a sound source or video acquired by filming a target object to be filmed as contents data;
a receiving device (128) which receives attribute data that is sent from a data-transmission apparatus that is attached to at least said sound source or said object and that indicates the attributes of at least that sound source or that object; and
a recording device (130) that correlates and records said attribute data with said acquired contents data.

7. The data-recording apparatus of claim 6 wherein when said acquisition device acquires video obtained by filming an object as contents data;
said acquisition device comprises:
a filming device (121) which films said object; and
a data-acquisition device which acquires images of the field of view of said filmed object as contents data.

8. The data-recording apparatus according to claim 7 wherein
said acquisition device acquires images of the field of view of said filmed object as contents data comprising a plurality of frames; and
said data-recording device correlates and records said attribute data with said video data for each said frame.

9. The data-recording apparatus according to claim 7 or claim 8 wherein
said receiving device receives at least identification information for identifying said filmed object from other objects, name information indicating the name of said object, age information indicating the age of said object, occupation information indicating the occupation of said object, gender information indicating the gender of said object, or personality information indicating the personality of said object, as said attribute information.

10. The data-recording apparatus according to claim 7 or claim 8 further comprising:
a projection device (123) which projects an optical beam onto a filming range in which films by said filming device is possible.

11. The data-recording apparatus according to claim 10 wherein when optical-beam information is sent from said data-transmission device attached to said object indicating that an optical beam projected from said projection device has been received;
said receiving device receives said optical-beam information together with said attribute information, and said recording device records said optical-beam information together with said attribute information.

12. The data-recording apparatus according to claim 6 wherein when said acquisition device acquires sound generated from a sound source as contents data;
said acquisition device comprises:
a pick-up microphone (126) that picks up sound generated from said sound source; and
a data-acquisition device that acquires sound picked up by said microphone as contents data.

13. The data-recording apparatus according to claim 12 wherein
said acquisition device acquires said sound as contents data comprising a plurality of frames, and said recording device correlates and records said attribute data with said audio data for each said frame.

14. The data-recording apparatus according to claim 12 or 13 wherein
said receiving device receives at least identification information for identifying said acquired sound source from other sound sources, name information that indicates the name of said sound source, or operator information related to the operator operating the sound source in order to output sound from said sound source, as said attribute data.

15. The data-recording apparatus according to claim 12 or 13 wherein when sound-source-output information is sent from the data-transmission apparatus attached to said sound source indicating whether or not there is sound output from the sound source;
said receiving unit receives said sound-source-output information together with said attribute information, and said recording device records said sound-source-output information together with said attribute information.

16. The data-recording apparatus according to any one of the claims 6 to 8, 12 and 13 wherein when said receiving device sends or receives said contents data to or from said data-transmission apparatus, it determines whether or not said data-transmission apparatus is capable of sending or receiving that contents data.

17. A data-transmission apparatus (110) that is attached to at least a sound source that generates sound or a target object to be filmed, **characterized in that** the data-transmission apparatus comprises:
a memory device (111) in which attribute data indicating the attributes of at least said sound source or object is stored in advance; and
a sending device (112) that sends said attribute data to said data-recording apparatus in order to correlate and record said stored attribute data with said contents data when the data-recording apparatus records at least the sound generated from said sound source or images of the field of view of said filmed object as contents data.

18. The data-transmission apparatus (110) according to claim 17 wherein said data-recording apparatus records by filming said object and said data-recording apparatus proj ects an optical beam on to a filming range, and comprising:
an optical -beam-receiving device (113) that receives said optical beam; and wherein
said sending device (112) sends optical-beam information to said data-recording apparatus indicating that said optical beam was received.

19. The data-transmission apparatus (110) according to claim 17 or 18 further comprising:
a sound-source microphone (114) that picks up sound generated from said sound source; and
a judgment device (115) which determines whether or not there is sound output from said sound source based on sound picked up by said sound-source microphone; and wherein
said sending device sends sound-source output information to said data-recording apparatus indicating the judgment result determined by said judgment device.

20. A data-recording method of recording at least sound generated from a sound source or video that is acquired by filming a target object, **characterized in that** the data-recording method comprises:
a sending process that sends attribute data from a data-transmission apparatus that is attached to at least said sound source or said object indicating at least the attributes of the sound source or object; and
a recording process of correlating and recording said sent attribute data with sound generated from the sound source or images obtained by filming the object to which the data-transmission apparatus is attached.

21. A data-recording method **characterized in that** the data-recording method comprises:
an acquisition process of acquiring at least sound generated from a sound source or images obtained by filming a target object as contents data; and
a receiving process of receiving attribute data sent from a data-transmission apparatus that is attached to at least said sound source or said object indicating the attributes of at least that sound source or that object.

22. A recording medium in which a data-recording program is recorded in a readable way by a computer included in a data-recording system, **characterized in that** the data-recording program causing the computer to function as:
an acquisition device which acquires at least sound generated from a sound source or images obtained by filming a target object as contents data;
a receiving device which receives attribute data sent from a data-transmission apparatus that is attached to at least said sound source or said object indicating the attributes of at least that sound source or that object; and
a recording-control device which correlates said received attribute data with said acquired contents data and records them in a data-recording unit.
